# EUROPÄISCHE PATENTSCHRIFT

(11) **EP 3 499 518 B1**
(45) Veröffentlichungstag und Bekanntmachung des Hinweises auf die Patenterteilung: **08.12.2021**
(21) Anmeldenummer: 17306768.7
(22) Anmeldetag: 13.12.2017
(51) Int. Cl.: H01B 9/00, H01B 7/282, H01B 7/288, H01B 13/02

(54) **ELEKTRISCHER LEITER AUS MASSIVEN SEGMENTEN**
ELECTRIC CONDUCTOR MADE OF SOLID SEGMENTS
CONDUCTEUR ÉLECTRIQUE COMPOSÉ DE SEGMENTS SOLIDES

(43) Veröffentlichungstag der Anmeldung: 19.06.2019
(73) Patentinhaber: Nexans, 92400 Courbevoie (FR)
(72) Erfinder: MENGER, Michael, 38110 Braunschweig (DE); VOIGT, Torsten, 30827 Garbsen (DE); GAULER, Volker, 30900 Wedemark (DE)
(74) Vertreter: Ipsilon

(56) Entgegenhaltungen:
- WO-A1-2012/065634
- GB-A- 342 308
- JP-A- H11 134 943
- JP-A- 2014 096 349
- JP-U- S5 561 913
- JP-U- S5 561 916

## Beschreibung

### Gebiet

Die Erfindung betrifft einen elektrischen Leiter, insbesondere für große Gleichströme.

### Hintergrund

Elektrische Leiter werden für vielfältige Anwendungszwecke eingesetzt, beispielsweise zum Transport elektrischer Energie oder zum Transport von durch elektrische Signale repräsentierte Informationen bzw. Daten.

Elektrische Leiter für den Transport elektrischer Energie in Form von Gleich- oder Wechselstrom bzw. Gleich- oder Wechselspannung müssen an die maximal über den Leiter zu transportierende Leistung angepasst werden. Die elektrische Leistung kann, vereinfacht dargestellt, als das Produkt aus Spannung und Strom angesehen werden. Der wirksame Querschnitt des elektrischen Leiters, also der Querschnitt des Leiters, der tatsächlich für den Stromtransport zur Verfügung steht, muss dabei so bemessen sein, dass der durch den Leiter fließende Strom an dem elektrischen Widerstand des Leiters zwischen dessen Enden bewirkte Spannungsabfall einen festgelegten maximal zulässigen Wert nicht überschreitet, und dass dementsprechend die in dem elektrischen Leiter im Wesentlichen in Wärme umgesetzte Verlustleistung einen maximal zulässigen Wert nicht überschreitet.

Der Querschnitt massiver elektrischer Leiter, also von aus einem einzigen Draht bestehenden elektrischen Leitern, kann aus fertigungstechnischen Gründen sowie aus Gründen der Handhabbarkeit nicht beliebig vergrößert werden. Bei massiven elektrischen Leitern großen Querschnitts ist insbesondere ein beim Verlegen möglicherweise notwendiges Biegen problematisch, weil das Leitermaterial am äußeren Radius des gebogenen Leiterstücks gestreckt und am inneren Radius des gebogenen Leiterstücks gestaucht wird. Strecken und Stauchen verändern jedoch den Querschnitt des Leiters und beeinflussen somit die lokale Stromtragfähigkeit bzw. den lokalen elektrischen Widerstand. Außerdem muss mit steigendem Querschnitt eines massiven elektrischen Leiters eine immer größere Kraft beim Biegen aufgebracht werden.

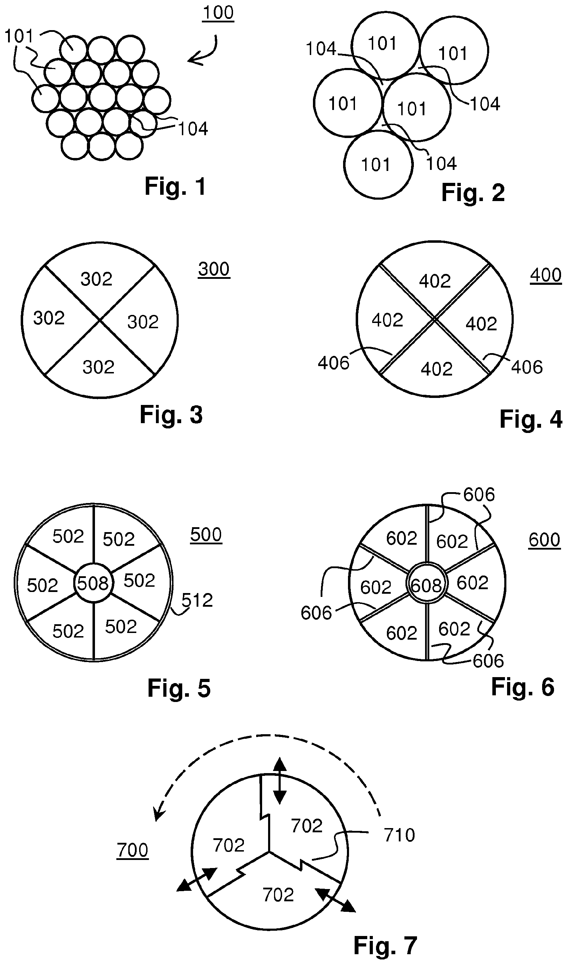

Um elektrische Leiter mit größeren effektiven Querschnitten herzustellen werden daher mehrere eindrähtige elektrische Leiter zu einem einzigen elektrischen Leiter zusammengefasst. Ein aus mehreren eindrähtigen Leitern 101 bestehender elektrischer Leiter 100 ist beispielhaft in Figur 1 dargestellt. Diese Art elektrischer Leiter wird häufig auch als mehrdrähtiger Leiter bezeichnet. Eine gängige Methode des Zusammenfassens elektrischer Leiter stellt das Verseilen dar. Beim Verseilen werden einzelne Drähte zu einem ersten Leiterbündel verdrillt. Je nach gewünschtem Querschnitt können mehrere erste Leiterbündel zu einem zweiten Leiterbündel verdrillt werden usw. Die Verdrillung verleiht den einzelnen Drähten des Leiterbündels einen festen Zusammenhalt und lässt dennoch ein Verbiegen des Leiters zu, was bspw. während der Verlegung von Vorteil sein kann. Bei einem mehrdrähtigen Leiter können einzelne Drähte oder Drahtbündel sich zueinander in Längsrichtung bewegen und dadurch den Kraftaufwand beim Biegen reduzieren. Das Dokument WO 2012/065634 A1 beschreibt ein Hochspannungskabel mit einem leitenden Kern mit mehreren Leitersektoren. Das Dokument JP S55 61916 U beschreibt einen elektrischen Leiter mit mehreren miteinander verseilten Segmenten.

In der Regel weisen die eindrähtigen elektrischen Leiter, die zu mehrdrähtigen Leitern zusammengefasst werden, einen runden Querschnitt auf. Wenn diese runden elektrischen Leiter zusammengefasst und gegebenenfalls auch verdichtet werden bleiben zwischen den einzelnen eindrähtigen Leitern Lücken, die nicht zum Stromtransport beitragen. Diese Lücken sind in Figur 1 mit dem Bezugszeichen 104 bezeichnet. Figur 2 zeigt einen vergrößerten Ausschnitt aus Figur 1, in dem die Lücken deutlicher erkennbar sind. Durch die für den Stromtransport nicht zur Verfügung stehenden Freiräume wird der Außendurchmesser oder der Umfang des mehrdrähtigen Leiters größer als bei einem massiven elektrischen Leiter mit gleichem effektiven Querschnitt. Es muss also mehr Isoliermaterial verwendet werden. Außerdem können entlang der Lücken zwischen den einzelnen eindrähtigen Leitern Fluide, also Gase, Feuchtigkeit oder Flüssigkeit in Längsrichtung des elektrischen Leiters transportiert werden. Insbesondere bei sehr kleinen Querschnitten der einzelnen Leiter kann dann ein Kapillareffekt auftreten, der Flüssigkeiten besonders weit ins Innere des Leiters fördern kann. Flüssigkeit oder Feuchtigkeit, aber auch Gase im Innern eines Leiters sind wegen der Gefahr der Korrosion und der damit verbundenen Beeinträchtigung der Leitfähigkeit sowie wegen der Beeinträchtigung der Eigenschaften der Isolierung unerwünscht.

Die Lücken zwischen Einzelleitern eines Leiterbündels müssen also mit einem Material gefüllt werden, welches das Ein- und Vordringen von Fluiden verhindert. Der Prozess und die Kontrolle der vollständigen Füllung der Lücken oder Quellfähigkeit des eingebrachten Materials ist aufwendig.

Eine teilweise Lösung dieses Problems stellt die Umhüllung der einzelnen eindrähtigen Leiter mit einer Isolierung vor dem Verseilen dar. Zumindest kann Korrosion einzelner Leiter damit verringert oder vermieden werden. Dadurch erhöht sich jedoch der Durchmesser des Leiterbündels wegen der zusätzlichen, nicht für den Stromtransport zur Verfügung stehenden Bereiche noch weiter, mit den obengenannten Auswirkungen. Außerdem wird die Isolierung beim Verseilen mechanisch beansprucht und kann beschädigt werden.

Die Isolierung von Einzelleitern kleineren Querschnitts eines Leiterbündels oder Segments hat Vorteile bei der Übertragung von Wechselströmen, weil die durch den sogenannten Skineffekt bewirkte ungleichmäßige Stromverteilung im Innern elektrischer Leiter hier weniger stark zum Tragen kommt. Bei der Übertragung von Gleichströmen, die insbesondere im Höchstspannungsbereich zunehmend Verwendung findet, spielt der Skineffekt jedoch keine Rolle, so dass der nötige produktionstechnische Aufwand und zusätzlicher Materialaufwand stärker ins Gewicht fallen.

### Zusammenfassung der Erfindung

Hiervon ausgehend hat die vorliegende Erfindung die Aufgabe, einen elektrischen Leiter mit großem wirksamem Querschnitt zu schaffen, insbesondere für die Übertragung von großen Gleichströmen, der Nachteile eines einteiligen Massivleiters vermeidet.

Zur Lösung dieser Aufgabe schlägt die Erfindung einen elektrischen Leiter gemäß Anspruch 1 mit drei oder mehr gleichförmigen, massiven Segmenten vor. Weitere Ausgestaltungen der Erfindung sind Gegenstand der abhängigen Ansprüche.

### Jedes

Segment weist mindestens zwei Seitenflächen auf, welche bündig an entsprechend gegenüberliegende Seitenflächen eines anderen Segments anlegbar sind. Bündig bedeutet in diesem Zusammenhang, dass keine Lücken oder Freiräume entlang der aneinander liegenden Seitenflächen vorhanden sind, die nicht durch Oberflächenrauigkeit oder Fertigungstoleranzen bedingt sind. Die Querschnittsfläche durch alle zu dem elektrischen Leiter zusammengesetzten Segmente ist durch eine im wesentlichen stufenfrei verlaufende geschlossene Kurve beschreibbar. Stufenfrei bedeutet in diesem Zusammenhang, dass eine den Querschnitt beschreibende Umhüllende im Übergangsbereich zweier Segmente im Idealfall keine Stufe aufweist. Dabei sind Fasen an den Kanten oder durch Fertigungstoleranzen bedingte sehr kleine Stufen unbeachtlich. Die zu dem elektrischen Leiter zusammengesetzten Segmente sind gemeinsam verseilt, also um eine zentrale Achse herum gewunden.

Die Verseilung der Segmente bewirkt, dass sich die Segmente auch ohne zusätzliche Ummantelung nicht über größere Strecken voneinander lösen können, bspw. bei Biegung des elektrischen Leiters. Außerdem kommt Aufgrund der Verseilung, abhängig von deren Schlaglänge, also der Distanz bis ein Segment wieder in seiner ursprünglichen Orientierung liegt, bei einer Biegung des elektrischen Leiters jedes Segment ein- oder mehrmals am Innenradius und am Außenradius der Biegung zu liegen und nimmt so einen Teil der Stauchung und der Dehnung auf. Dadurch wird jedes einzelne Segment nur wenig verformt und der Querschnitt der Segmente und damit des elektrischen Leiters bleibt im Wesentlichen unverändert.

Bei einem oder mehreren der vorstehend oder nachfolgend angeführten Ausführungsbeispiele kann die Verseilungsrichtung abschnittsweise wechseln, z.B. in regelmäßigen Abständen.

Bei einem Ausführungsbeispiel ist der Querschnitt des aus mehreren Segmenten zusammengesetzten elektrischen Leiters kreisförmig.

Bei einem Ausführungsbeispiel sind die gleichförmigen massiven Segmente um ein andersförmiges zentrales Element herum bündig angeordnet. Das zentrale Element kann aus leitendem oder nichtleitendem Material bestehen, bspw. aus demselben Material wie die Segmente. Es kann massiv ausgeführt sein, aber auch durch einen Hohlkörper gebildet sein. Im Extremfall ist das zentrale Element ein wandloser Hohlraum, der erst durch die zusammengesetzten Segmente gebildet wird.

Bei einem Ausführungsbeispiel ist zwischen den drei oder mehr gleichförmigen Segmenten bzw. den gleichförmigen Segmenten und dem zentralen Element eine Trennlage angeordnet, welche eine stoffschlüssige Verbindung der Segmente und des zentralen Elements verhindert. Die stoffschlüssige Verbindung kann bspw. durch lokale Temperaturerhöhung durch Reibung bei Biegung der Anordnung erfolgen, oder auch durch Kaltverschweißen bei Biegung. Die Trennlage kann durch eine feste oder pastöse, elektrisch leitende oder nichtleitende Schicht gebildet sein, beispielsweise ein Vlies oder eine mit Metallpartikeln versetzte Fettpaste. Eine Reduzierung der Flexibilität der Anordnung, die durch eine auch nur lokale stoffschlüssige Verbindung der Segmente bewirkt würde, kann durch die Trennlage wirksam verhindert werden.

Bei einem Ausführungsbeispiel ist zwischen den Segmenten eine Schicht angeordnet, die bei Kontakt mit einem Fluid, beispielsweise Gasen, Flüssigkeiten oder allgemein bei Feuchtigkeit aufquillt und ein weiteres Ein- oder Vordringen des Fluids verhindert. Das Material kann dabei bei Kontakt mit bestimmten Fluiden besonders stark aufquellen, während andere Fluide kein oder nur geringes Aufquellen bewirken. Ein derart selektiv quellendes Material kann bspw. bei Wasserkontakt stark quellen, während ölhaltige Flüssigkeiten kein oder nur geringes Quellen bewirken. Die bei Kontakt mit einem Fluid aufquellende Schicht kann zugleich eine stoffschlüssige Verbindung der Segmente verhindern. Die bei Kontakt mit einem Fluid aufquellende Schicht kann, ebenso wie die Trennlage, durch eine feste oder pastöse Schicht gebildet sein.

Die Trennlage und die bei Fluidkontakt aufquellende Schicht können als eine einzelne Schicht ausgeführt sein, die beide Funktionen bereitstellt und dabei elektrisch leitend oder nichtleitend sein kann.

Bei einem oder mehreren Ausführungsbeispielen ist die komplettierte Anordnung der Segmente des elektrischen Leiters von einer Bandierung umhüllt. Die Bandierung kann beispielsweise aus einem isolierenden, elektrisch leitenden oder halbleitenden Material bestehen. Zusätzlich oder alternativ dazu kann die komplettierte Anordnung der Segmente von einer Bandierung aus einem bei Kontakt mit Feuchtigkeit oder Flüssigkeit quellenden Material umhüllt sein. Das Material der Bandierung kann gleichzeitig elektrisch leitend oder halbleitend sein und bei Kontakt mit einem Fluid aufquellen.

Die Bandierung kann durch spiralförmiges Umwickeln des komplettierten elektrischen Leiters mit einem bandförmigen Material erfolgen, oder durch kontinuierliches nahtloses Umhüllen, bspw. mittels Extrusion.

Die Verwendung von Trennschichten und/oder Umhüllungen aus einem bei Kontakt mit einem Fluid aufquellenden Material verhindert wirksam einen Transport des Fluids entlang der Längsachse des elektrischen Leiters und kann dadurch bspw. Korrosion an nach einer Verlegung des elektrischen Leiters unzugänglichen Stellen verhindern, oder den Transport des Fluids durch den Leiter in einen anderen Raum.

Erfindungsgemäß weisen die Segmente an den aneinander liegenden Flächen Profile oder speziell geformte Bereiche auf, die ein lösbares zueinander Anordnen im unverseilten Zustand ermöglichen, und die die Segmente im verseilten Zustand kontinuierlich, unlösbar formschlüssig verbinden. Die Profile können derart gestaltet sein, dass mehrere Segmente ohne bevorzugte Montagerichtung zueinander angeordnet werden können, wohingegen das letzte Segment nur in einer Vorzugsrichtung zu den übrigen Segmenten hinzugefügt werden kann. Eine Verschiebung der Segmente gegeneinander in Längsrichtung kann dabei weiterhin möglich sein, insbesondere im unverseilten Zustand, so dass eine bei Biegung des elektrischen Leiters aufzubringende Kraft geringer bleibt als bei einem einteiligen massiven Leiter gleichen Querschnitts. Im verseilten Zustand kann eine Verschiebung in Längsrichtung begrenzt oder reduziert sein.

Die solcherart kontinuierlich, unlösbar formschlüssig verbundenen Segmente bleiben auch ohne Bandierung bei einer Verdrehung in Längsrichtung gegen die Verseilrichtung miteinander verbunden und aneinander anliegend, solange die Verseilung durch die gegensinnige Verdrehung nicht aufgehoben wird.

Die auch bei diesem Ausführungsbeispiel mögliche Bandierung sowie die profilierten Flächen verringern oder verhindern ein Aufspalten des elektrischen Leiters an den aneinander anliegenden Flächen bei Biegung desselben und tragen dazu bei, dass eine gegebenenfalls zwischen den Segmenten angeordnete aufquellende Trennschicht ihre Funktion besser erfüllen kann.

Der erfindungsgemäße elektrische Leiter weist einen in Bezug auf seinen Umfang oder Außendurchmesser optimierten effektiven elektrischen Querschnitt auf. Gleichzeitig lässt sich eine größere Flexibilität der Anordnung erzielen als bei einem einzelnen Massivleiter gleichen Querschnitts.

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1: einen aus mehreren runden Drähten zusammengesetzten elektrischen Leiter bekannter Bauart,
- Fig. 2: ein vergrößertes Detail des bekannten, aus mehreren runden Drähten zusammengesetzten elektrischen Leiters aus Figur 1,
- Fig. 3: einen ersten aus dem Stand der Technik bekannten elektrischen Leiter mit vier Segmenten,
- Fig. 4: einen zweiten aus dem Stand der Technik bekannten elektrischen Leiter mit vier von einer Trennlage getrennten Segmenten,
- Fig. 5: einen dritten aus dem Stand der Technik bekannten elektrischen Leiter mit sechs Segmenten, die um ein zentrales Element herum angeordnet sind,
- Fig. 6: einen vierten aus dem Stand der Technik bekannten elektrischen Leiter mit sechs von einer Trennlage getrennten Segmenten, die um ein zentrales Element herum angeordnet sind, und
- Fig. 7: einen beispielhaften erfindungsgemäßen elektrischen Leiter mit drei Segmenten mit profilierten Anlageflächen.

Gleiche oder ähnliche Elemente sind in den Figuren mit gleichen oder ähnlichen Bezugszeichen versehen.

Der in den Figuren 1 und 2 gezeigte, aus mehreren runden Leitern zusammengesetzte elektrische Leiter bekannter Bauart wurde bereits mit Bezug auf den Stand der Technik beschrieben und wird an dieser Stelle nicht erneut erläutert.

### Ausführungsbeispiele

Figur 3 zeigt einen Querschnitt durch einen ersten aus dem Stand der Technik bekannten elektrischen Leiter 300 mit vier gleichförmigen, massiven Segmenten 302. Die Segmente sind in dem Beispiel gleich groß, es ist aber auch vorstellbar, unterschiedlich große Segmente zu verwenden. In diesem Fall kann es sinnvoll sein, die Anfangs- und Endkontaktierung so auszuführen, dass die Stromstärke bezogen auf die Querschnittsfläche in jedem Segment möglichst identisch ist, um bei schlechtem elektrischen Kontakt zwischen den einzelnen Segmenten entlang des elektrischen Leiters unterschiedliche Stromstärken zu vermeiden.

Figur 4 zeigt einen Querschnitt durch einen zweiten aus dem Stand der Technik bekannten elektrischen Leiter 400 mit vier von einer Trennlage 406 getrennten, gleich großen, massiven Segmenten 402. Wie weiter oben beschrieben kann die Trennlage elektrisch leitend oder nichtleitend sein, und kann aus einem Material bestehen, das bei Kontakt mit einem Fluid aufquillt.

Figur 5 zeigt einen Querschnitt durch einen dritten aus dem Stand der Technik bekannten elektrischen Leiter 500 mit sechs gleich großen, massiven Segmenten 502, die um ein zentrales Element 508 herum angeordnet sind. Das zentrale Element 508 kann aus einem leitenden oder einem nichtleitenden Material bestehen. Im Extremfall kann das zentrale Element durch einen Hohlraum gebildet sein. In einen solchen Hohlraum kann, abhängig von dessen Querschnittsfläche, nachträglich bspw. Flüssigkeiten, Gase oder eine Glasfaser eingebracht werden, um zusätzlich einen Datentransport zu ermöglichen. Dieses nachträgliche Einbringen eines weiteren Elements kann sogar nach der Verlegung des elektrischen Leiters erfolgen. In der Figur ist ebenfalls eine äußere Umhüllung 512 des elektrischen Leiters 500 gezeigt, die durch die doppelte äußere Linie angedeutet ist.

Figur 6 zeigt einen Querschnitt durch einen vierten aus dem Stand der Technik bekannten elektrischen Leiter 600 mit sechs von einer Trennlage 606 getrennten, gleich großen, massiven Segmenten 602, die um ein zentrales Element 608 herum angeordnet sind. Wie bei dem Beispiel aus Figur 5 kann das zentrale Element 608 kann aus einem leitenden oder einem nichtleitenden Material bestehen oder von einem Hohlraum gebildet sein. Im Unterschied zu dem Beispiel aus Figur 5 ist zwischen den Segmenten und dem zentralen Element jeweils eine Trennlage 606 vorgesehen. Die Trennlage kann, wie mit Bezug auf Figur 4 beschrieben, elektrisch leitend oder nichtleitend sein, und kann aus einem Material bestehen, das bei Kontakt mit einem Fluid aufquillt.

Figur 7 zeigt einen Querschnitt durch einen beispielhaften erfindungsgemäßen elektrischen Leiter 700 mit drei Segmenten 702 mit profilierten Anlageflächen. Die Anlageflächen sind solcherart profiliert, dass ein Lösen eines jeden Segments 702 aus dem komplettierten elektrischen Leiter 700 vor einer Verseilung, nur in eine bestimmte Richtung möglich ist. Die Verseilung ist durch den gestrichelten Pfeil angedeutet. Die Richtung, in der das Segment im unverseilten Zustand gelöst werden kann ist für jedes Segment durch den entsprechenden Pfeil angegeben. In der Figur ist die Profilierung durch die Stufe 710 gebildet. Es ist unschwer zu erkennen, dass beim Zusammensetzen der Segmente 702 das zumindest das letzte Segment 702 den übrigen Segmenten 702 nur in der angezeigten Richtung hinzugefügt werden kann.

Die Profilierung kann die Handhabung des elektrischen Leiters 700 vor der Verseilung oder vor der Umhüllung mit einer elektrischen Isolierung oder dergleichen erleichtern, weil sie die Segmente zusammenhält. Auch diese Variante des erfindungsgemäßen elektrischen Leiters kann eine Trennlage zwischen den Segmenten aufweisen (nicht gezeigt), oder um ein zentrales Element herum angeordnet sein (nicht gezeigt). Die Trennlage kann, wie mit Bezug auf Figur 4 beschrieben, elektrisch leitend oder nichtleitend sein, und kann aus einem Material bestehen, das bei Kontakt mit einem Fluid aufquillt.

### Bezugszeichenliste

- 100: elektrischer Leiter
- 101: eindrähtiger Leiter
- 104: Lücke
- 300: elektrischer Leiter
- 302: Segment
- 400: elektrischer Leiter
- 402: Segment
- 406: Trennlage/Schicht
- 500: elektrischer Leiter
- 502: Segment
- 508: zentrales Element
- 512: Umhüllung
- 600: elektrischer Leiter
- 602: Segment
- 606: Trennlage/Schicht
- 608: zentrales Element
- 700: elektrischer Leiter
- 702: Segment
- 710: Stufe/Profil

## Patentansprüche

1. Elektrischer Leiter (300; 400; 500; 600; 700) mit drei oder mehr gleichförmigen, massiven Segmenten (302; 402; 502; 602; 702), wobei jedes Segment (302; 402; 502; 602; 702) zwei Seitenflächen aufweist, welche bündig an entsprechend gegenüberliegende Seitenflächen eines anderen Segments (302; 402; 502; 602; 702) anlegbar sind, wobei die Segmente (302; 402; 502; 602; 702) an den aneinander liegenden Seitenflächen Profile (710) aufweisen, die ein zueinander Anordnen im unverseilten Zustand ermöglichen, und die die Segmente (302; 402; 502; 602; 702) im verseilten Zustand kontinuierlich, unlösbar formschlüssig verbinden, wobei die Querschnittsfläche durch alle zu dem elektrischen Leiter (300; 400; 500; 600; 700) zusammengesetzten Segmente (302; 402; 502; 602; 702) durch eine im wesentlichen stufenfrei verlaufende geschlossene Kurve beschreibbar ist, und wobei alle zu dem elektrischen Leiter (300; 400; 500; 600; 700) zusammengesetzten Segmente (302; 402; 502; 602; 702) gemeinsam verseilt sind,
**dadurch gekennzeichnet, dass**
die Profile der Seitenflächen durch eine Stufe (710) so gestaltet sind, dass ein letztes hinzuzufügendes Segment zu den übrigen, bereits in ihrer Endlage zueinander befindlichen Segmenten nur in einer Richtung hinzufügbar ist, die parallel zu einer das Profil tragenden Seitenfläche des benachbarten Segments verläuft und sich radial von einer Längsachse des elektrischen Leiters erstreckt, ohne dass die Lage eines der übrigen Segmente zu den anderen noch einmal verändert werden muss, und dass die Profile die bereits in ihrer Endlage befindlichen benachbarten Segmente vor dem Hinzufügen des letzten hinzuzufügenden Segments in ihrer Position halten.

2. Elektrischer Leiter (300; 400; 500; 600; 700) nach Anspruch 1, wobei die Querschnittsfläche kreisförmig ist.

3. Elektrischer Leiter (300; 400; 500; 600; 700) nach Anspruch 1 oder 2, wobei die gleichförmigen massiven Segmente (302; 402; 502; 602; 702) um ein andersförmiges zentrales Element (508; 608) herum bündig angeordnet sind.

4. Elektrischer Leiter (300; 400; 500; 600; 700) nach einem der vorhergehenden Ansprüche, wobei zwischen den drei oder mehr Segmenten (302; 402; 502; 602; 702) eine Trennlage (406; 606) angeordnet ist, die eine stoffschlüssige Verbindung der Segmente (302; 402; 502; 602; 702) verhindert.

5. Elektrischer Leiter (300; 400; 500; 600; 700) nach einem der vorhergehenden Ansprüche, wobei zwischen den Segmenten (302; 402; 502; 602; 702) eine Schicht (406; 606) aus einem bei Kontakt mit einem Fluid aufquellenden Material angeordnet ist.

6. Elektrischer Leiter (300; 400; 500; 600; 700) nach einem der vorhergehenden Ansprüche, wobei die Verseilungsrichtung abschnittsweise wechselt.

7. Elektrischer Leiter (300; 400; 500; 600; 700) nach einem der vorhergehenden Ansprüche, wobei der elektrische Leiter (300; 400; 500; 600; 700) von einer äußeren Umhüllung (512) umgeben ist.

8. Elektrischer Leiter (300; 400; 500; 600; 700) nach Anspruch 7, wobei die äußere Umhüllung aus einem bei Kontakt mit einem Fluid aufquellenden Material gefertigt ist.

9. Elektrischer Leiter (300; 400; 500; 600; 700) nach Anspruch 7, wobei die äußere Umhüllung (512) aus einem elektrisch leitenden oder halbleitenden Material gefertigt ist.

10. Elektrischer Leiter (300; 400; 500; 600; 700) nach Anspruch 7, wobei die äußere Umhüllung (512) aus einem spiralförmig um den elektrischen Leiter (300; 400; 500; 600; 700) gewickelten, bandförmigen Material gefertigt ist.

11. Elektrischer Leiter (300; 400; 500; 600; 700) nach Anspruch 7, wobei die äußere Umhüllung (512) den elektrischen Leiter (300; 400; 500; 600; 700) kontinuierlich nahtlos umgibt.

## Claims

1. An electrical conductor (300; 400; 500; 600; 700) with three or more uniform, solid segments (302; 402; 502; 602; 702), wherein each segment (302; 402; 502, 602; 702) has two side surfaces, which can be applied flush to correspondingly opposite side surfaces of another segment (302; 402; 502; 602; 702), wherein the segments (302; 402; 502; 602; 702) have profiles (710) on the side surfaces lying next to one another, which profiles enable an arrangement relative to one another in the non-stranded state, and which connect the segments (302; 402; 502; 602; 702) in the stranded state in a continuous, non-detachable positive manner, wherein the cross-sectional surface through all segments (302; 402; 502, 602; 702) assembled to form the electrical conductor (300; 400; 500; 600; 700) can be described by a closed curve extending substantially step-free, and wherein all segments (302; 402; 502; 602; 602) assembled to form the electrical conductor (300, 400, 500; 600; 700) are stranded together,
**characterized in that**
the profiles of the side surfaces are shaped by a step (710) in such a manner that a last segment to be added to the remaining segments already located in their end position relative to one another can be added only in a direction, which runs parallel to a side surface of the adjacent segment bearing the profile and extends radially from a longitudinal axis of the electrical conductor without the position of the remaining segments relative one another having to be changed again, and that the profiles hold the adjacent segments, which are already located in their end position, in their position before the addition of the last segment to be added.

2. The electrical conductor (300; 400; 500; 600; 700) according to claim 1, wherein the cross-sectional surface is circular.

3. The electrical conductor (300; 400; 500; 600; 700) according to claim 1 or 2, wherein the uniform, solid segments (302; 402; 502; 602; 702) are arranged flush around a differently-shaped central element (508; 608).

4. The electrical conductor (300; 400; 500 600; 700) according to any one of the preceding claims, wherein a separation layer (406; 606) is arranged between the three or more segments (302; 402; 502; 602; 702), which separation layer prevents a material connection of the segments (302; 402; 502; 602; 702).

5. The electrical conductor (300; 400; 500; 600; 700) according to any one of the preceding claims, wherein a layer (406; 606) consisting of a material that swells upon contact with a fluid is arranged between the segments (302; 402; 502; 602; 702).

6. The electrical conductor (300; 400; 500; 600; 700) according to any one of the preceding claims, wherein the stranding direction changes in sections.

7. The electrical conductor (300; 400; 500; 600; 700) according to any one of the preceding claims, wherein the electrical conductor (300; 400; 500; 600; 700) is surrounded by an outer sheathing (512).

8. The electrical conductor (300; 400; 500; 600; 700) according to claim 7, wherein the outer sheathing is made of a material that swells upon contact with a fluid.

9. The electrical conductor (300; 400; 500; 600; 700) according to claim 7, wherein the outer sheathing (512) is made from an electrically conductive or semi-conductive material.

10. The electrical conductor (300; 400; 500; 600; 700) according to claim 7, wherein the outer sheathing (512) is made from a band-shaped material wound spirally around the electrical conductor (300; 400; 500; 600; 700).

11. The electrical conductor (300; 400; 500; 600; 700) according to claim 7, wherein the outer sheathing (512) continuously surrounds the electrical conductor (300; 400; 500; 600; 700) in a seamless manner.

## Revendications

1. Conducteur électrique (300 ; 400 ; 500, 600 ; 700) avec trois segments massifs de même forme (302 ; 402 ; 502 ; 602 ; 702) ou plus, dans lequel chaque segment (302 ; 402 ; 502 ; 602 ; 702) comprend trois faces latérales qui peuvent s'appuyer en affleurement contre des faces latérales opposées correspondante d'un autre segment (302 ; 402 ; 502 ; 602 ; 702), dans lequel les segments (302 ; 402 ; 502 ; 602 ; 702) présentent, au niveau des faces latérales (302 ; 402 ; 502 ; 602 ; 702) appuyées les unes contre les autres, des profils (710) qui permettent une disposition non torsadée entre eux, et qui relient les segments (302 ; 402 ; 502 ; 602 ; 702) dans l'état non torsadé de manière continue, de manière amovible et par complémentarité de forme, dans lequel surface de section transversale de tous les segments (302 ; 402 ; 502 ; 602 ; 702) assemblés en un conducteur électrique (300 ; 400 ; 500, 600 ; 700) peut être décrite par une courbe fermée s'étendant globalement sans épaulement et dans lequel tous les segments (302 ; 402 ; 502 ; 602 ; 702) assemblés en un conducteur électrique (300 ; 400 ; 500, 600 ; 700) sont torsadés ensemble,
**caractérisé en ce que**
les profils des faces latérales sont constitués d'un épaulement (710) de façon à ce qu'un dernier segment à ajouter puisse être ajouté aux autres segments se trouvant déjà dans leur position finale les uns par rapport aux autres uniquement dans une direction qui est parallèle à une face latérale portant le profil du segment adjacent et s'étend radialement à partir d'un axe longitudinal du conducteur électrique, sans que la position d'un des autres segments par rapport aux autres ne doive être modifié encore une fois et de façon à ce que les profils maintiennent les segments adjacents se trouvant déjà dans leur position finale en position avant l'ajout du dernier segment à ajouter.

2. Conducteur électrique (300 ; 400 ; 500, 600 ; 700) selon la revendication 1, dans lequel la surface de section transversale est circulaire.

3. Conducteur électrique (300 ; 400 ; 500, 600 ; 700) selon la revendication 1 ou 2, dans lequel les segments massifs de même forme (302 ; 402 ; 502 ; 602 ; 702) sont disposés en affleurement autour d'un élément central (508 ; 608) d'une autre forme.

4. Conducteur électrique (300 ; 400 ; 500, 600 ; 700) selon l'une des revendications précédentes, dans lequel, entre les trois segments (302 ; 402 ; 502 ; 602 ; 702) ou plus, est disposée une couche de séparation (406 ; 606) qui empêche une liaison par continuité de matière des segments (302 ; 402 ; 502 ; 602 ; 702).

5. Conducteur électrique (300 ; 400 ; 500, 600 ; 700) selon l'une des revendications précédentes, dans lequel, entre les segments (302 ; 402 ; 502 ; 602 ; 702), est disposée une couche (406 ; 606) constituée d'un matériau gonflant au contact d'un fluide.

6. Conducteur électrique (300 ; 400 ; 500, 600 ; 700) selon l'une des revendications précédentes, dans lequel la direction de torsadage change à certains endroits.

7. Conducteur électrique (300 ; 400 ; 500, 600 ; 700) selon l'une des revendications précédentes, dans lequel le conducteur électrique (300 ; 400 ; 500, 600 ; 700) est entouré d'une enveloppe externe (512).

8. Conducteur électrique (300 ; 400 ; 500, 600 ; 700) selon la revendication 7, dans lequel l'enveloppe externe est constituée d'un matériau gonflant au contact d'un fluide.

9. Conducteur électrique (300 ; 400 ; 500, 600 ; 700) selon la revendication 7, dans lequel l'enveloppe externe (512) est constituée d'un matériau électro-conducteur ou semiconducteur.

10. Conducteur électrique (300 ; 400 ; 500, 600 ; 700) selon la revendication 7, dans lequel l'enveloppe externe (512) est constituée d'un matériau en forme de bande, enroulé en spirale autour du conducteur électrique (300 ; 400 ; 500, 600 ; 700).

11. Conducteur électrique (300 ; 400 ; 500, 600 ; 700) selon la revendication 7, dans lequel l'enveloppe externe (512) entoure le conducteur électrique (300 ; 400 ; 500, 600 ; 700) de manière continue et homogène.
